# EUROPEAN PATENT SPECIFICATION

(11) **EP 1 936 616 B1**
(45) Date of publication and mention of the grant of the patent: **06.10.2010**
(21) Application number: 07024432.2
(22) Date of filing: 17.12.2007
(51) Int. Cl.: G11B 7/09, G11B 7/22, G11B 7/095

(54) **Objective lens driving device, assembling method for the same and optical disc apparatus**
Antriebsvorrichtung zum Verstellen einer Objektivlinse, Montageverfahren dafür und optisches Plattengerät
Dispositif pour actionner une lentille d'objectif, son procédé d'assemblage et appareil à disque optique

(30) Priority: 20.12.2006 JP 2006342194
(43) Date of publication of application: 25.06.2008
(73) Proprietor: Funai Electric Co., Ltd., Daito-shi, Osaka 574-0013 (JP)
(72) Inventor: Hatano, Shinya, Daito-shi Osaka 574-0013 (JP)
(74) Representative: Beetz & Partner

(56) References cited:
- EP-A- 1 205 920
- JP-A- 2006 031 781
- JP-A- 2006 134 532
- US-A1- 2006 221 470

## Description

### BACKGROUND OF THE INVENTION

### Field of the Invention

The present invention relates to an optical disc apparatus which performs reproducing of information recorded on an optical recording medium and recording of information on an optical recording medium, in particular, the present invention relates to architecture and assembling method of an objective lens driving device which is arranged in the optical disc apparatus.

### Description of Related Art

When recording or reproducing is performed on an optical recording medium such as a compact disc (CD), a digital versatile disc (DVD), in addition, a Blu-ray disc (BD) which is capable of high density recording and the like, an optical disc apparatus is utilized. In the optical disc apparatus, when the recording or reproducing is performed on the optical recording medium, it is necessary to control position of an objective lens in order that focal point of the objective lens is always positioned on a recording surface of the optical recording medium regardless of waving surface of the recording medium or the like, or position of a beam spot which is formed by the objective lens is not displaced from a track of the optical recording medium. For this purpose, an objective lens driving device is arranged on the optical disc apparatus.

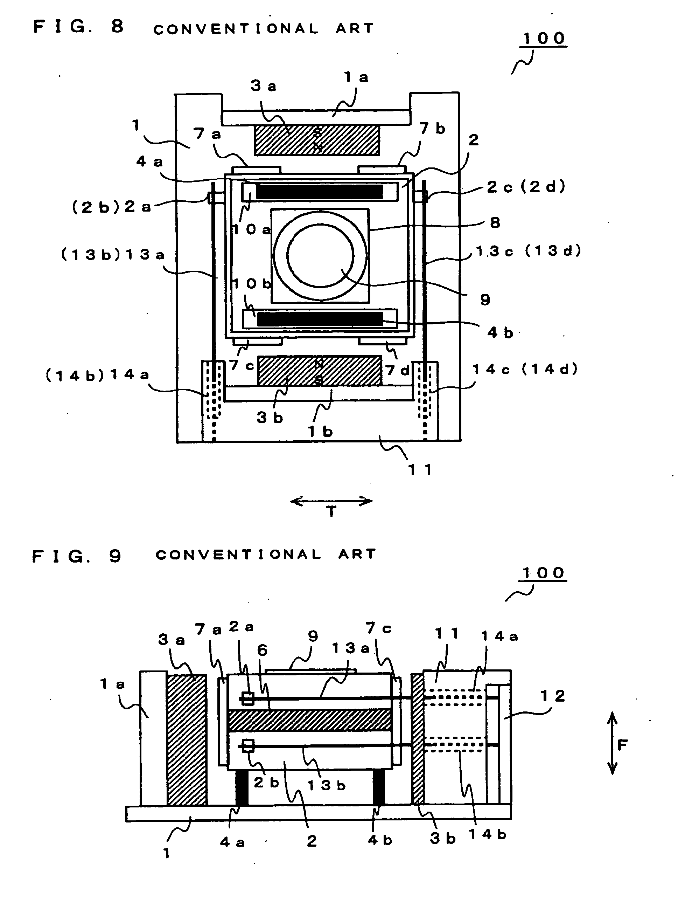

Hereinafter an objective lens driving device in conventional technology will be explained with reference to Fig. 8 and Fig. 9. Fig. 8 is a schematic plan view to show a structure of an objective lens driving device 100 in conventional technology when the objective lens driving device is viewed from top. Fig. 9 is a schematic lateral view to show a structure of the objective lens driving device 100 in conventional technology when the objective lens driving device is viewed from one side.

The objective lens driving device 100 is mainly composed of a base member 1 which is made by metal having ferromagnetism and a lens holder 2 which is made by molded resin. In approximately center of the base member 1, a through hole (not shown) to pass a light beam is formed, and above the through hole, the lens holder 2 detail of which will be described later is disposed. Further, on the base member 1, a pair of permanent magnets 3a, 3b which face each other with a predetermined distance so as to sandwich the lens holder 2, are disposed to stand. Each of these permanent magnets 3a, 3b is fixed on the base member 1 in a state they are integrated magnetically by fixing outer surface of each of the magnets 3a, 3b magnetically on raised portions 1a, 1b which are formed by bending the base member 1.

In addition on the base member 1, a pair of yokes 4a, 4b are disposed to stand between the permanent magnets 3a, 3b so that they face each other in substantially the same direction as the permanent magnets 3a, 3b. Each of these yokes 4a, 4b is formed by bending the base member 1. At this point, each of the yokes 4a, 4b effectively draws magnetic flux from the respective permanent magnets 3a, 3b so that high density magnetic flux is given mainly to a focusing coil 6, and tracking coils 7a - 7d, which are disposed between the yokes 4a, 4b, which will be described later, as a result, it plays a role to improve drive efficiency of the lens holder 2.

In the lens holder 2, a light path hole (not shown) which extends in perpendicular direction to a paper surface of Fig. 8, is formed in central part of it in order to pass the light beam, and an objective lens 9 is held by an objective lens holding portion 8 which is set up in upper side of a cavity. In addition, the objective lens 9 which is held by the objective lens holding portion 8, is mounted such that an optical axis of it becomes parallel to a direction which is perpendicular to the paper surface of Fig. 8. Further, on the lens holder 2, cavity portions 10a, 10b are set up such that the above described yokes 4a, 4b can penetrate them.

Outside of a side wall of the lens holder 2, a focusing coil 6 is set up such that it surrounds the optical axis of the objective lens 9 which is mounted on the lens holder 2, and the coil is fixed on the lens holder 2 by an adhesive or the like. In addition, outside of both side walls which face to the respective permanent magnets 3a, 3b among the side walls of the lens holder 2, the tracking coils 7a - 7d are set up in left and right of the side walls such that every pair of them face each other and the tracking coils 7a - 7d are connected as a whole by a wire.

Further on the base member 1, outside of the raised portion 1b on which one of the permanent magnet 3b is fixed magnetically, a gel holder 11 which is formed of molded resin such as polycarbonate or the like is fixed, and in addition, a circuit board 12 is disposed to stand adjoining to outside of the gel holder 11. Each one end of wires (rod like elastic supporting members)13a, 13b, 13c, 13d which have conductivity are connected by soldering to two positions of upper and lower direction in left and right sides of this circuit board 12, respectively. Each of these four wires 13a - 13d are inserted into the through holes 14a, 14b, 14c, 14d which are formed in the gel holder 11, at corresponding position to the connected positions to the circuit board 12, that is, two positions of upper and lower direction in left and right sides, respectively.

Other ends of the wires 13a, 13c which are in the upper side, are fixed in a state that they are electrically connected with the focusing coil 6 by soldering at wire supporting portions 2a, 2c which are set up in the lens holder 2. Other ends of the wires 13b, 13d which are in the lower side, are fixed in a state that they are electrically connected with the tracking coils 7a - 7d by soldering at wire supporting portions 2b, 2d which are set up in the lens holder 2. By these arrangements, the lens holder 2 is supported in swingable manner with respect to the base member 1 by the respective wires 13a - 13d.

In addition, insides of each of the through holes 14a - 14d of the gel holder 11 through which each of the wires 13a - 13d is inserted, gel material which has silicone as main component, is filled. At this point, the gel material is formed by injecting low viscosity gel material (sol) into the through holes 14a - 14d of the gel holder 11 and irradiating it with ultraviolet rays for a predetermined period of time so that the material becomes solidified in a gel state. This gel holder 11 play a role of attenuating and suppressing vibration that is generated in each of the wires 13a - 13d in response to driving of the lens holder 2, by the gel material.

In the objective lens driving device 100 which is structured as above, when electric current is supplied via wires 13a, 13c to the focusing coil 6 from the circuit board 12, the lens holder 2 becomes movable in a focusing direction F (See, Fig. 9) by electromagnetic action (electromagnetic force action) with a magnetic field which is formed by the permanent magnets 3a, 3b. As a result, by adjustment of magnitude and direction of the electric current that is supplied to the focusing coil 6, positional adjustment of the objective lens 9 in the focusing direction F is made possible.

Further, when electric current is supplied via wires 13b, 13d to the tracking coils 7a - 7d from the circuit board 12, the lens holder 2 is made movable in a tracking direction T (See, Fig. 8) by electromagnetic action (electromagnetic force action) with a magnetic field which is formed by the permanent magnets 3a, 3b. As a result, by adjustment of magnitude and direction of electric current that is supplied to the tracking coils 7a - 7d, positional adjustment of the objective lens 9 in the tracking direction T is made possible.

In the objective lens driving device 100 which is structured as above, there is a case that a center of driving force which is decided by positional relation between a magnetic circuit which is composed of the base member 1, the permanent magnets 3a, 3b and yokes 4a, 4b, and coils (focusing coil 6, and tracking coils 7a - 7d), and a center of supporting which is decided by pasting state of wires 13a - 13d that support the lens holder 2, do not agree with each other when the device is assembled. In such a case, when the lens holder 2 is driven in the focusing direction or the tracking direction, moment is generated and the objective lens 9 is also tilted with the lens holder 2 from a prescribed position. If the objective lens 9 is tilted against the optical recording medium, it causes deterioration of recording performance and reproducing performance of the optical disc apparatus. In particular, for an optical disc apparatus which has compatibility with an optical recording medium for high density recording, because influence of the tilting of the objective lens 9 is much large, it is necessary to suppress tilting of the objective lens 9 as little as possible.

Displacement of the center of driving force is generated by variation in parts dimension of the coils, the lens holder, and the like, and by variation in assembly when these parts are assembled. Further, displacement of the center of supporting is generated by error in attaching the wires 13a - 13d and the like. As a result, in the conventional technology, the above described tilting of the objective lens 9 was made not be generated by strict control of accuracy of the parts and accuracy of assembly. However, in such a case, it has caused problems of cost rise of components, aggravation of workability, degradation of productivity and the like.

With respect to this point, a technology is proposed, for example in JP-A-2003-030873, JP-A-2002-074705, and JP-A-2001-184682, by which tilting of the objective lens when the movable portion is moved (DC tilting) can be cut down without making accuracy of parts or accuracy of assembly strict. According to JP-A-2003-030873, a position of the center of supporting of the movable portion can be adjusted in order to agree positions of the center of driving force and the center of supporting with each other, without changing position of the center of driving force of the objective lens driving device by disposing rod like elastic supporting members which are disposed in both sides in optical axis direction of the objective lens as one pair, aligning in not parallel, and by adjusting rigidity a plurality of elastic fixing portions of elastic base plate to which end portion of each of the rod like elastic supporting member is fixed. As a result, the DC tilting can be reduced.

Further, in JP-A-2002-074705 an objective lens driving device is proposed which has a structure in which as for some of rod like elastic supporting members which support an objective lens holding member in movable manner in one axial direction or two axial directions with respect to the base plate, rigidity ratio of at least one rod like elastic supporting member to others of the rod like elastic supporting member, is changed by constraining one end portion of the at least one rod like elastic supporting member using high viscosity material. According to the objective lens driving device, the center of driving force and the center of supporting can be agreed with each other by absorbing the assembling error and the parts error, and the objective lens can become hard to tilt with respect to an optical disc when the movable portion is moved.

Further, in JP-A-2001-184682, an objective lens driving device is proposed which has a structure in which, for example, a fixing member which supports a rod like elastic supporting member, is structured to have a cut portion in a halfway of a connection portion with the rod like elastic supporting member, a span in at least one moving direction of the rod like elastic supporting member is changed by an adjusting component which is inserted to the cut portion. According to the objective lens driving device, the span of the rod like elastic supporting member can be changed easily and with high accuracy and the center of driving force and the center of supporting can be agreed with each other by utilizing elastic deformation of the fixing member in which the cut portion is formed.

However, in case of the structure proposed in JP-A-2003-030873, it is necessary to prepare the elastic base plate additionally because the structure makes the center of driving force and the center of supporting of the movable portion agree with each other by setting up the elastic base plate on which a plurality of elastic fixing portions are formed, and adjusting the rigidity of the plurality of elastic fixing portions, it causes a problem that number of parts increases. In addition, work efficiency is not good because the structure performs adjustment of the rigidity of the elastic fixing portion by adjustment of length of the elastic fixing portion using an adhesive.

In case of the structure proposed in JP-A-2002-074705, because it has a structure to adjust the ratio of rigidity between the rod like elastic supporting members using the high viscosity material, it is not easy to adjust the ratio of rigidity, and in addition, it causes a problem that workablity is not good because the high viscosity material is used. Further, in case of the structure proposed in JP-A-2001-184682, it causes a problem that number of parts increases because necessity to add the adjusting parts to the objective lens driving device is generated.
The Document JP 2006134532 A discloses a lens holder for an optical pickup including a magnetic circuit. A moveable part is supported on an elastic member and driven by the magnetic circuit. The magnetic circuit is provided with concave parts. The document JP 2006 031781 A teaches an optical pickup with permanent magnets and with a coil enclosing a yoke part. The yoke part has a hole.
The document EP 1 205 920 A2 discloses a lens driving apparatus with two pairs of magnets, wherein a groove is formed between each of the pairs.

### SUMMARY OF THE INVENTION

In view of the above described problems it is an object of the present invention to provide an objective lens driving device in which tilting of an objective lens that is generated when it is driven can be cut down without making accuracy of parts or accuracy of assembly strict and in addition without increasing number of parts. Further, it is another object of the present invention to provide an assembling method of such objective lens driving device. In addition, it is other object of the present invention to provide an optical disc apparatus which can improve recording performance and reproducing performance by including an objective lens driving device that can cut down tilting of the objective lens which is generated when the device is driven.

To attain the above described object an objective lens driving device in accordance with the present invention is characterized by including the features of the objective lens driving device according to claim 1, in particular: an objective lens; a lens holder which holds the objective lens; a rod like elastic supporting member which supports the lens holder in movable manner; at least one coil which is fitted on the lens holder; a magnet on which a groove or hole that makes chucking from outside of the device possible, is formed; and a driving portion which displaces the lens holder using an electromagnetic force action that is generated between a magnetic field which is generated by the magnet and electric current which passes a coil.

According to the invention because the groove or hole is formed on the magnet, it becomes possible to perform positional adjustment in a final step of assembling for the objective lens driving device by moving the magnet while holding the magnet surely utilizing a jig. As a result, it becomes possible to make a center of driving force and a center of supporting agree with each other without making accuracy of parts or accuracy of assembly strict, and it becomes possible to cut down tilting of the objective lens which is generated when the objective lens is driven. In addition, it has good workability because an adhesive or the like is not used when the adjustment for the center of driving force and the center of supporting to agree with each other is performed.

Further in the objective lens driving device structured as above described, it is preferable that the chucked portion is formed by processing of a part of the magnet.

By this arrangement because the device has a structure in that the chucked portion is formed by processing of a part of the magnet, an objective lens driving device in that the tilting of the objective lens which is generated when the device is driven, can be cut down, can be provided without increasing number of parts.

Still further, in the objective lens driving device structured as above described and according to the present invention, it is preferable that two of the magnets are disposed such that they face each other to sandwich the lens holder, and the chucked portion is formed on a surface which is other than a surface that is parallel to the surface to face between the two magnets.

By this arrangement it is easy to achieve the positional adjustment which is performed while chucking the magnet by a jig utilizing the chucked portion in a final step of assembling.

In addition to attain the above described object an optical disc apparatus in accordance with the present invention is characterized by including the objective lens driving device structured as above described.

By this arrangement because the optical disc apparatus includes the objective lens driving device structured as above described, tilting of the objective lens when recording or reproducing is performed can be suppressed. As a result, it becomes possible to provide an optical disc apparatus in which recording performance and reproducing performance are improved.

Further, to attain the above described object, an assembling method for an objective lens driving device in accordance with the present invention is characterized by including: an objective lens; a lens holder which holds the objective lens; a rod like elastic supporting member which supports the lens holder in movable manner; a magnet on which a chucked portion that makes chucking from outside of the device possible, is set up; and a driving portion which displaces the lens holder using an electromagnetic force action that is generated between a magnetic field which is generated by the magnet and electric current which passes a coil, and the method is also characterized by including a step to chuck the magnet by a jig utilizing the chucked portion and to perform positional adjustment of the magnet.

By this arrangement, adjustment to make a center of driving force and a center of supporting in the objective lens driving device, agree with each other, can be realized without making accuracy of parts or accuracy of assembly strict, in addition, without increasing number of parts. As a result, it becomes easy to provide an objective lens driving device in that the tilting of the objective lens which is generated when it is driven, can be cut down.

### BRIEF DESCRIPTION OF THE DRAWINGS

Fig. 1 is a block diagram to show a structure of one embodiment of an optical disc apparatus in which an objective lens driving device according to the present invention, is arranged.
Fig. 2 is a schematic diagram to show a structure of an optical system of an optical pickup which is arranged in the optical disc apparatus according to the present embodiment.
Fig. 3 is a diagram to explain a principle that tilting is generated in an objective lens when an objective lens driving device is driven.
Fig. 4A is a schematic perspective view to show a structure of a permanent magnet which is arranged in the objective lens driving device according to the present embodiment.
Fig. 4B is a schematic plan view to show a structure of a permanent magnet which is arranged in the objective lens driving device according to the present embodiment.
Fig. 5 is a diagram to explain about positional adjustment of a permanent magnet which is arranged in the objective lens driving device according to the present embodiment.
Fig. 6 is a graph to show one example of result that adjustment of DC tilting is performed by moving a permanent magnet in a focusing direction in the objective lens driving device according to the present embodiment.
Fig. 7A is a schematic perspective view to show a structure of a permanent magnet which is arranged in an objective lens driving device according to another embodiment.
Fig. 7B is a schematic perspective view to show a structure of a permanent magnet which is arranged in an objective lens driving device according to other embodiment.
Fig. 8 is a schematic plan view to show a structure of an objective lens driving device in conventional technology when the objective lens driving device is viewed from top.
Fig. 9 is a schematic lateral view to show a structure of an objective lens driving device in conventional technology when the objective lens driving device is viewed from one side.

### DETAILED DESCRIPTION OF THE PREFERRED EMBODIMENTS

Hereinafter an embodiment of the present invention will be explained with reference to drawings. In addition, the embodiment shown here is mere one example and the present invention is not limited to the embodiment shown here. In this explanation description will be given in order of a gross structure of an optical disc apparatus in which an objective lens driving device according to the present invention is arranged, and detail of the objective lens driving device according to the present embodiment.

### [Gross structure of an optical disc apparatus]

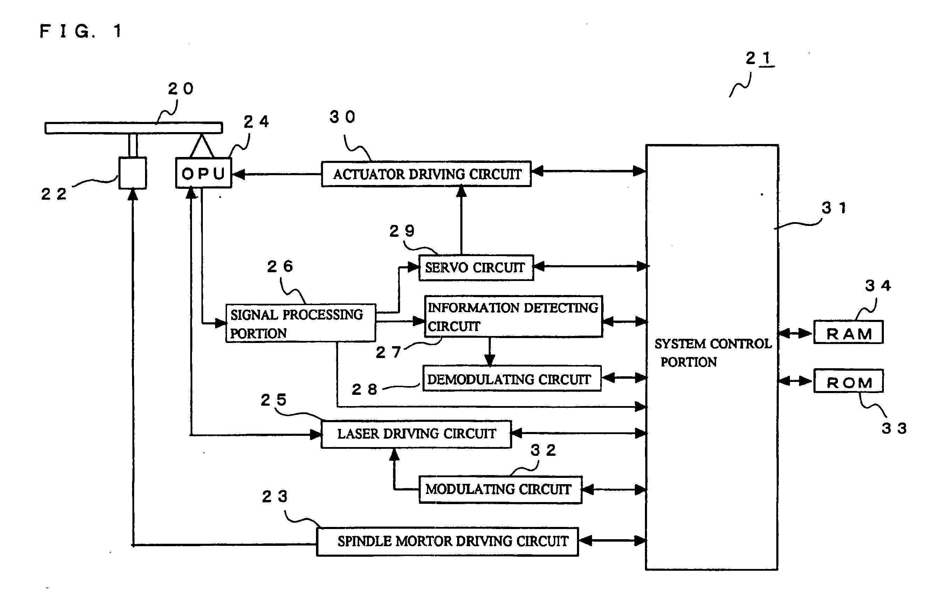

Fig. 1 is a block diagram to show a structure of one embodiment of an optical disc apparatus in which an objective lens driving device according to the present invention, is arranged. The optical disc apparatus 21 is set up to be capable of recording information to an optical disc (optical recording medium) 20 and of reproducing information which is recorded on the optical disc 20. In addition, the optical disc apparatus 21 can perform recording and reproducing information on/from three kinds of optical discs 20 of a BD, a DVD, and a CD.

Reference numeral 22 designates a spindle motor and the optical disc 20 is held detachably by a chuck portion (not shown) which is set up above the spindle motor 22. The spindle motor 22 continuously rotates the optical disc 20 when the optical disc 20 is recorded or reproduced. Rotation control of the spindle motor 22 is performed by a spindle motor driving circuit 23.

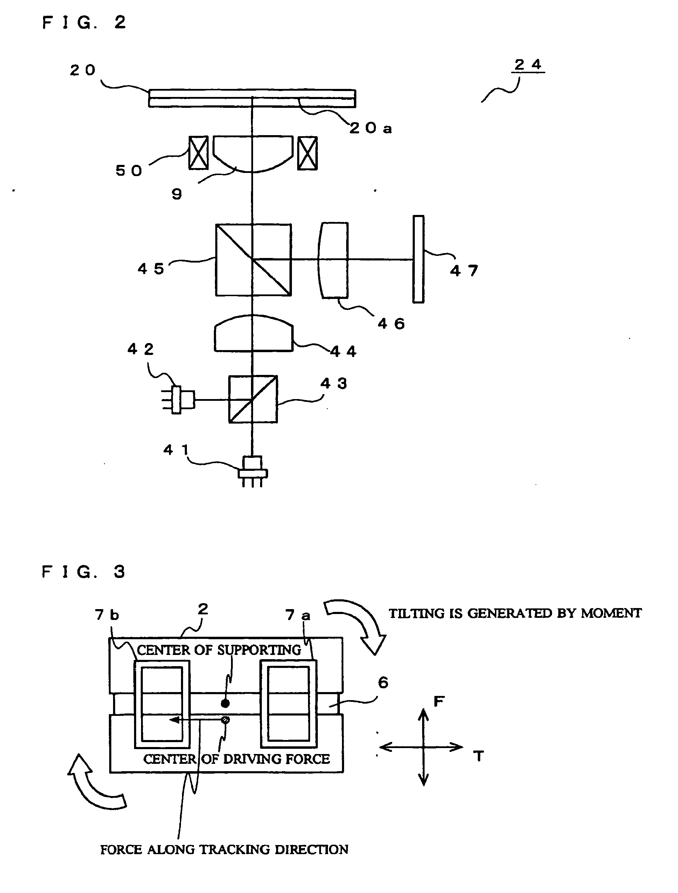

Reference numeral 24 designates an optical pickup, which irradiates a laser beam that is emitted from a light source to the optical disc 20 to make reading information which is recorded on the optical disc 20 and writing information on the optical disc 20 possible. Fig. 2 is a schematic diagram to show an optical system of the optical pickup 24. As shown in Fig. 2, the optical pickup 24 is equipped with a first light source 41, a second light source 42, a dichroic prism 43, a collimator lens 44, a beam splitter 45, an objective lens 9, a condenser lens 46, and a photo detector 47. In addition, a structure of the optical system by which the optical pickup is structured, is not limited to the above described example, and various modifications can be introduced, of course.

The first light source 41 is a laser diode which emits a laser beam having single wavelength, and it emits the laser beam having a wavelength of 405 nm band which is used for a BD. The second light source 42 is a laser diode which is compatible to two wavelengths and can emit laser beams having two wavelengths, and it switches between the laser beams having a wavelength of 650 nm band which is used for a DVD and a wavelength of 780 nm band which is used for a CD and emits the beam.

In the optical pickup 24, the laser beam which is emitted from the light sources 41 or 42, passes the dichroic prism 43, and is converted into parallel ray by the collimator lens 44. The laser beam passes the beam splitter 45 and is condensed by the objective lens 9 on a recording surface 20a on which information of the optical disc 20 is recorded. A reflected beam reflected by the recording surface 20a of the optical disc 20 passes the objective lens 9, is reflected by the beam splitter 45, and is condensed by the condenser lens 46 on a photo receiving region in the photo detector 47. The photo detector 47 converts received light information into electric signal.

Now back to Fig. 1, a laser driving circuit 25 controls driving of the light sources 41, 42 when information is reproduced and recorded. When information is recorded, the laser driving circuit 25 controls the light sources 41, 42 based on signal from a modulating circuit 32 which modulates information input from outside. Further, the laser driving circuit 25 also performs output control of the laser beam which is emitted from the light sources 41, 42 based on information from a photo receiving element (not shown) for front monitoring.

A signal processing portion 26 is supplied electric signal from the photo detector 47 (See, fig. 2), and performs processing of the supplied electric signal to generate RF signal, focus error signal (FE signal), and tracking error signal (TE signal).

An information detecting circuit 27 performs processing waveform equalization and the like on the RF signal supplied from the signal processing portion 26 to perform reading out of the information which is recorded on the optical disc 20. The information read out by the information detecting circuit 27 is demodulated by a demodulating circuit 28, and the demodulated reproducing signal is output to external devices (not shown) such as a personal computer and the like.

A servo circuit 29 performs generation of focus driving signal and tracking driving signal based on the FE signal and the TE signal which are generated by the signal processing portion 26.

An actuator driving circuit 30 controls driving of objective lens driving device 50 (See, Fig. 2) on which the objective lens 9 (See, Fig. 2) is mounted, based on the focus driving signal and the tracking driving signal which are supplied from the servo circuit 29.

A system control portion 31 includes a microcomputer to adequately perform control processes in response to necessary operations which are achieved by respective portions composing the optical disc apparatus 21.

In a system control portion 31 Read Only Memory (ROM) 33 and Random Access Memory (RAM) 34 are set up. In the ROM 33, various parameters and operating programs which are required for the system control portion 31 to achieve various processes, are stored. The RAM 34 is used as a working region for the system control portion 31 and it is made as a storing region for various kinds of data.

### [Detail of the objective lens driving device]

Hereinafter detail of the objective lens driving device 50 according to the present embodiment will be explained. A structure of the objective lens driving device 50 according to the present embodiment is basically the same as a structure of the conventional objective lens driving device 100 shown in Fig. 8 and Fig. 9. Therefore, explanation about portions which has the same structure will be omitted. Further, for explanation on the objective lens driving device 50 according to the present embodiment, on the components which are the same as those for the objective lens driving device 100, the same reference numerals are used.

The objective lens driving device 50 has different structure about the permanent magnets 3a, 3b from the conventional objective lens driving device 100. Therefore, hereinafter explanation will be given for these. First, reason why the structure of the permanent magnets 3a, 3b is different from those for the conventional objective lens driving device 100, will be explained with reference to Fig. 3.

Fig. 3 is a diagram to explain a principle that tilting is generated in the objective lens 9 when an objective lens driving device is driven. A center of driving force shown in Fig. 3 is decided by a positional relation among a magnetic circuit which is composed of the permanent magnets 3a, 3b, yokes 4a, 4b, and the base member 1, and focusing coil 6 and tracking coils 7a - 7d which are fixed on the lens holder 2. Further, a center of supporting is decided by pasting state of the wires 13a - 13d which support the lens holder 2.

In Fig. 3, a state that the center of driving force and the center of supporting are displaced in the focusing direction F is shown as one example. When force along the tracking direction T is generated in the state that the center of driving force and the center of supporting are displaced in the focusing direction F as shown in Fig. 3, a moment of the force is generated and the lens holder 2 rotates in a direction shown by arrows in Fig. 3, and the objective lens 9 which is mounted on the lens holder 2 is tilted (DC tilting is generated).

The displacement of the center of driving force and the center of supporting is generated by variation in parts dimension and by variation in assembly. As above described, if accuracy of parts and accuracy of assembly are strictly controlled, it causes problems in manufacturing cost and productivity. Therefore, in the objective lens driving device 50 according to the present embodiment, the permanent magnets 3a, 3b are structured such that the center of driving force and the center of supporting can be agreed with each other by adjusting position of the permanent magnets 3a, 3b when they are assembled without enhancing the accuracy of parts and the like so high.

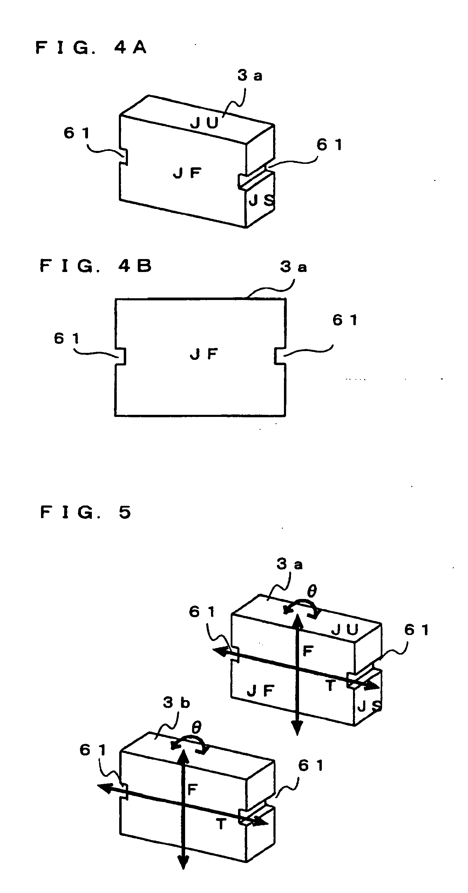

Fig. 4A and Fig. 4B are diagrams to show a structure of a permanent magnet 3a which is arranged in an objective lens driving device 50. Fig. 4A is a schematic perspective view to show a structure of the permanent magnet 3a, and Fig. 4B is a schematic plan view to show a structure of the permanent magnet 3a. As shown in Fig. 4A and Fig. 4B, the permanent magnet 3a is formed in a rectangular parallelepiped shape. Further, grooves 61 which have substantially rectangular cross section, are formed in a symmetrical position on two surfaces JS, JS, which face each other on the permanent magnet 3a. In addition, a surface JF on the permanent magnets 3a is a surface facing to the lens holder 2 and a surface JU is a surface which corresponds to the top surface in Fig. 9.

The groove 61 which is formed on the permanent magnet 3a is formed, for example, by cutting operation for the permanent magnet 3a. However, forming method for the groove 61 is not limited to the cutting operation and it is no problem that they are formed using a method or the like to form the groove utilizing a shape of molding tool which is used when the permanent magnet 3a is formed. Here, description is given about the permanent magnet 3a in the above explanation, however, the same grooves 61 are formed also on the permanent magnet 3b.

Hereinafter, effect of forming the groove 61 as above described on the permanent magnets 3a, 3b will be explained. Fig. 5 is a diagram to explain about positional adjustment of the permanent magnets 3a, 3b, which are arranged in the objective lens driving device 50. Because the grooves 61 are formed in the permanent magnets 3a, 3b, it is possible to chuck them surely utilizing a jig. In this point the groove 61 which is formed in the permanent magnets 3a, 3b can be said that it functions as a chucked portion.

Further, because the permanent magnets 3a, 3b can be chucked by the jig utilizing the grooves61, position of the permanent magnet can be adjusted by moving it in the focusing direction F, the tracking direction T, and a rotational direction θ shown in Fig. 5, in a final step of assembling the objective lens driving device 50. When the adjustment is performed, it is no problem that, for example, the tilting (DC tilting) of the objective lens 9 is detected utilizing an autocollimator while the objective lens driving device 50 is driven, then the positions of the permanent magnets 3a, 3b which are chucked by the jig, are moved such that an amount of the DC tilting becomes small. The permanent magnets 3a, 3b are fixed on the raised portions 1a, 1b (See, Fig. 8) by an adhesive or the like in order that the positions do not move after the positions of the permanent magnets 3a, 3b are decided (after the positional adjustment is completed).

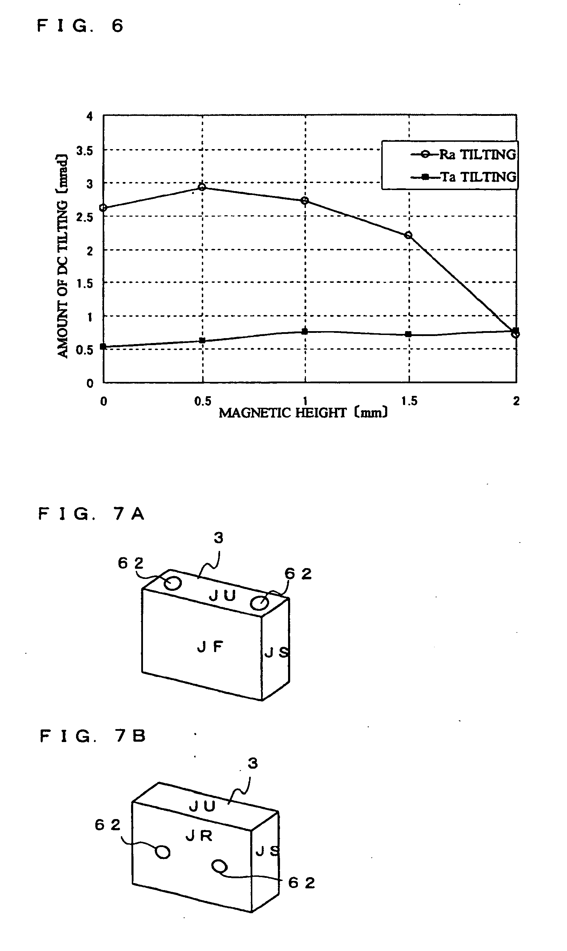

Fig. 6 is a graph to show one example of result that the adjustment of the DC tilting is performed by moving the permanent magnets 3a, 3b in the focusing direction F (that is, a height direction with respect to the base member 1). As shown in Fig. 6, it is understood that the position can be adjusted where the amount of the DC tilting becomes as little as possible by performing the positional adjustment of the permanent magnet 3a, 3b (only moving in the focusing direction in this embodiment) in the final step of assembling. In addition, in Fig. 6, a Ra tilting means the tilting in a radial direction (it is the same as the tracking direction), and a Ta tilting means the tilting in tangential direction (it is a direction perpendicular to the focusing direction and the tracking direction).

In the present embodiment, the objective lens driving device has a structure in that two grooves 61 which have substantially rectangular cross section, are set up symmetrically on the permanent magnets 3a, 3b. However, the present invention is not intended to limit to the embodiment, and various modifications can be introduced without departing object of the present invention. That is, for example, it is no problem that a structure is employed in which more than two grooves 61 are set up in each of left side and right side respectively, and it is not necessary that they are in symmetrical position. In addition, as for the shape of the groove 61, it is possible to introduce any modification in its shape as far as it can be surely chucked by the jig.

Further in the present embodiment, the objective lens driving device has a structure in that the chucked portion (groove 61) is formed on the surface JS of the permanent magnets 3a, 3b. However, the present invention is not limited to the embodiment, and for example, it is no problem that a structure is employed in which the chucked portion 62 is formed on the top surface JU of the permanent magnets 3a, 3b as shown in Fig. 7A. In Fig. 7A, a structure is employed in that a hole which has substantially circular cross section, is formed as the chucked portion 62. Even in this case, if a jig which has a switching mechanism whose tip portion extends toward side surface of the chucked portion 62 after it is inserted into the chucked portion 62, is utilized, chucking of the permanent magnets 3a, 3b is possible.

Further, in the structure shown in Fig. 7A, for much surely chucking, it is no problem that the hole which is structured as the chucked portion 62, is made to have two diameters in upper side (a first hole) and in lower side (a second hole) (the second hole has larger diameter), and the tip portion (it is possible to extend and to retract the tip portion toward the side surface of the hole by the switching mechanism) of the jig is hung at a step of two holes. In addition, in case where the chucked portion 62 is set up on the top surface JU of the permanent magnet 3a, 3b, it has a merit that positional adjustment of the permanent magnet 3a, 3b can be performed by the jig even if circumference of the permanent magnet 3a, 3b is narrow.

Further, it is no problem that a structure is employed in which the chucked portion 62 is formed on a surface JR of the permanent magnets 3a, 3b, that is a rear surface of the surface JF which faces to the lens holder 2 as shown in Fig. 7B according to the structure of the objective lens driving device.

### [Other]

In the embodiment described above, the optical disc apparatus 1 is an apparatus which can perform recording and reproducing of the optical disc. However, it is of course no problem that the apparatus can perform only reproducing. Further, it is needless to say that as for the kind of the optical disc 20 to which the optical disc apparatus 1 is applied, it is not limited to the kinds described in the present embodiment, and it can be changed adequately.

By the objective lens driving device according to the present invention, tilting of the objective lens can be suppressed small. As a result, recording performance and reproducing performance of an optical disc apparatus in which an objective lens driving device according to the present invention is arranged, can be improved. Therefore, the objective lens driving device according to the present invention is very useful.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An objective lens driving device comprising:
an objective lens (9);
a lens holder (2) which is configured to hold the objective lens (9);
at least one coil (6, 7a, 7b) which is fitted on the lens holder (2);
a rod like elastic supporting member (13a, 13b, 13c, 13d) which is configured to support the lens holder (2) in movable manner;
two magnets (3a, 3b) which are disposed to face each other across the lens holder (2); and
a driving portion (31) which is configured to displace the lens holder (2) using an electromagnetic force action that is generated between a magnetic field which is generated by each of the magnets (3a, 3b) and electric current which passes the coil (6, 7a, 7b),
**characterized in that** said magnets (3a, 3b) comprise at least one groove (61) or hole that makes chucking from outside of the device possible.

2. The objective lens driving device according to claim 1, **characterized in that** the groove (61) or hole is formed by processing of a part of the magnet.

3. The objective lens driving device according to claim 1 or claim 2, **characterized in that** the groove (61) or hole is formed on a surface which is other than a surface that is parallel to the surface at which the two magnets (3a, 3b) face each other.

4. An optical disc apparatus in which the objective lens driving device according to any one of claim 1 to claim 3 is arranged.

5. An assembling method for an objective lens driving device including: an objective lens (9); a lens holder (2) which holds the objective lens (9); a rod like elastic supporting member (13a, 13b, 13c, 13d) which supports the lens holder (2) in movable manner; at least one coil (6, 7a, 7b) which is fitted on the lens holder (2); a magnet (3a, 3b); and a driving portion (61) which displaces the lens holder (2) using an electromagnetic force action that is generated between a magnetic field which is generated by the magnet (3a, 3b) and electric current which passes the coil (6, 7a, 7b), **characterized in that** the method comprises a step to chuck the magnet (3a, 3b) by a jig by utilizing a groove (61) or hole provided in the magnet (3a, 3b) and to perform positional adjustment of the magnet (3a, 3b).

## Patentansprüche

1. Objektivlinsen-Antriebsvorrichtung mit:
einer Objektivlinse (9);
einem Linsenhalter (2), der dazu konfiguriert ist, die Objektivlinse (9) zu halten;
zumindest einer Spule (6, 7a, 7b), die auf den Linsenhalter (2) gepasst ist;
einem stabartigen elastischen Halteelement (13a, 13b, 13c, 13d), das dazu konfiguriert ist, den Linsenhalter (2) beweglich zu halten;
zwei Magneten (3a, 3b), die so angeordnet sind, dass sie einander über dem Linsenhalter (2) zugewandt sind; und
einem Antriebsabschnitt (31), der dazu konfiguriert ist, den Linsenhalter (2) mittels eines elektromagnetischen Kraftvorgangs zu versetzen, der zwischen einem Magnetfeld, das von jedem der Magnete (3a, 3b) erzeugt wird, und einem elektrischen Strom, der durch die Spule (6, 7a, 7b) fließt, erzeugt wird,
**dadurch gekennzeichnet, dass** die Magnete (3a, 3b) zumindest eine Nut (61) oder ein Loch umfassen, das ein Einspannen von außerhalb der Vorrichtung möglich macht.

2. Objektivlinsen-Antriebsvorrichtung nach Anspruch 1, **dadurch gekennzeichnet, dass** die Nut (61) oder das Loch durch Bearbeiten eines Teils des Magneten ausgebildet wird.

3. Objektivlinsen-Antriebsvorrichtung nach Anspruch 1 oder Anspruch 2, **dadurch gekennzeichnet, dass** die Nut (61) oder das Loch auf einer Oberfläche ausgebildet ist, die eine andere als eine Oberfläche ist, die parallel zu der Oberfläche ist, an der die zwei Magnete (3a, 3b) einander zugewandt sind.

4. Optische Plattenvorrichtung, in der die Objektivlinsen-Antriebsvorrichtung nach irgendeinem der Ansprüche 1 bis 3 angeordnet ist.

5. Montageverfahren für eine Objektivlinsen-Antriebsvorrichtung mit: einer Objektivlinse (9); einem Linsenhalter (2), der die Objektivlinse (9) hält; einem stabartigen elastischen Halteelement (13a, 13b, 13c, 13d), das den Linsenhalter (2) beweglich hält; zumindest einer Spule (6, 7a, 7b), die auf den Linsenhalter (2) gepasst ist; einem Magneten (3a, 3b); und einem Antriebsabschnitt (31), der den Linsenhalter (2) mittels eines elektromagnetischen Kraftvorgangs versetzt, der zwischen einem Magnetfeld, das von dem Magneten (3a, 3b) erzeugt wird, und einem elektrischen Strom, der durch die Spule (6, 7a, 7b) fließt, erzeugt wird, **dadurch gekennzeichnet, dass** das Verfahren einen Schritt zum Einspannen des Magneten (3a, 3b) durch eine Einspannvorrichtung unter Verwendung einer Nut (61) oder eines Lochs, die in dem Magneten (3a, 3b) vorgesehen sind, und zum Durchführen einer Positionsverstellung des Magneten (3a, 3b) umfasst.

## Revendications

1. Dispositif pour actionner une lentille d'objectif comprenant :
une lentille d'objectif (9) ;
un porte-lentille (2), qui est configuré pour supporter la lentille d'objectif (9) ;
au moins une bobine (6, 7a, 7b) qui est fixée sur le porte-lentille (2) ;
un élément de support élastique en forme de tige (13a, 13b, 13c, 13d) qui est configuré pour supporter le porte-lentille (2) d'une manière mobile ;
deux aimants (3a, 3b) qui sont disposés face à face de part et d'autre du porte-lentille (2) ; et
une partie d'actionnement (31) qui est configurée pour déplacer le porte-lentille (2) utilisant une force électromagnétique qui est générée entre un champ magnétique qui est généré par chacun des aimants (3a, 3b) et un courant électrique qui traverse la bobine (6, 7a, 7b),
**caractérisé en ce que** lesdits aimants (3a, 3b) comprennent au moins une rainure (61) ou un orifice qui permet la fixation à partir de l'extérieur du dispositif.

2. Dispositif pour actionner une lentille d'objectif selon la revendication 1, **caractérisé en ce que** la rainure (61) ou l'orifice est formé grâce au traitement d'une partie de l'aimant.

3. Dispositif pour actionner une lentille d'objectif selon la revendication 1 ou la revendication 2, **caractérisé en ce que** la rainure (61) ou l'orifice est formé sur une surface autre qu'une surface qui est parallèle à la surface au niveau de laquelle les deux aimants (3a, 3b) se font face.

4. Appareil pour disque optique dans lequel le dispositif pour actionner une lentille d'objectif selon l'une quelconque des revendications 1 à 3 est disposé.

5. Procédé d'assemblage d'un dispositif pour actionner une lentille d'objectif comprenant : une lentille d'objectif (9) ; un porte-lentille (2) qui supporte la lentille d'objectif (9) ; un élément de support élastique en forme de tige (13a, 13b, 13c, 13d) qui supporte le porte-lentille (2) d'une manière mobile ; au moins une bobine (6, 7a, 7b) qui est fixée sur le porte-lentille (2) ; un aimant (3a, 3b) ; et une partie d'actionnement (61) qui déplace le porte-lentille (2) utilisant une force électromagnétique qui est générée entre un champ magnétique qui est généré par l'aimant (3a, 3b) et un courant électrique qui traverse la bobine (6, 7a, 7b), **caractérisé en ce que** le procédé comprend une étape pour fixer l'aimant (3a, 3b) grâce à un dispositif de serrage en utilisant une rainure (61) ou un orifice prévu dans l'aimant (3a, 3b) et pour réaliser l'ajustement de la position de l'aimant (3a, 3b).
